# EUROPEAN PATENT APPLICATION

(11) **EP 0 855 214 A1**
(43) Date of publication of application: **29.07.1998**
(21) Application number: 96929571.6
(22) Date of filing: 09.09.1996
(51) Int. Cl.: B01D 63/04

(54) **HOLLOW YARN MEMBRANE INTEGRATING MODULE**

(30) Priority: 13.09.1995 JP 235119/95
(71) Applicant: KANEGAFUCHI KAGAKU KOGYO KABUSHIKI KAISHA, Kita-ku Osaka-shi Osaka-fu 530 (JP)
(72) Inventor: EGUCHI, Tamiyuki, Hyogo 651-11 (JP)
(74) Representative: VOSSIUS & PARTNER
(86) International application number: JP9602568
(87) International publication number: WO9710046

(57) **Abstract**

A hollow fiber membrane integrated module in which at least two hollow fiber membrane units prepared by bundling a plurality of hollow fiber membranes are linearly arranged, at least two rows thereof are arranged in parallel, filtrate passageways of each unit are connected with each other, at least one aeration hole is present between those rows in the vicinity of each hollow fiber membrane unit, those aeration holes are arranged in parallel, the aeration holes are connected with each other through air passageways, those structural elements are all assembled in an integrated body, and the integrated body has at least one filtrate outlet and at least one air inlet is provided. The hollow fiber membrane integrated module has a structure providing advantages that air bubbles aerated in a liquid to be treated effective oscillate the hollow fiber membranes, the hollow fiber membranes are not liable to be cut, the effective membrane area is large, the hollow fiber membrane can withstand air back washing, and fabrication is simple.

## Description

### BACKGROUND OF THE INVENTION

### 1. Field of the Invention

The present invention relates to a hollow fiber membrane integrated module for filtering a liquid containing a large amount of materials to be removed such as activated sludge waters, and more particularly, to a module suitable for an immersion filtration method which utilizes aeration and filtration in combination.

### 2. Description of the Related Art

If a liquid containing a large amount of materials to be removed such as activated sludge waters or sewages is filtered with pressure, clogging of the filter is remarkable. However, the clogging is considerably reduced by using aeration and suction filtration in combination.

To make this filtration method effective, it is required for the membrane module to have a structure such that air bubbles aerated in a liquid to be treated vigorously stirs the liquid to be treated which is in contact with a membrane surface.

For such purposes, several types of membrane modules in which improvements were made in arrangement of hollow fiber membranes have been developed, such as a module in which a hollow fiber membrane bundle having one free edge is horizontally arranged so that the hollow fiber membrane oscillates by rising air bubbles as described in, for example, Japanese Unexamined Patent Publication No. Hei. 4-180821; a module in which the hollow fiber membrane is expanded like an umbrella form from its fixed edge to the other free edge as described in, for example, Japanese Unexamined Patent Publication No. Hei. 4-187219; and a module in which hollow fiber membranes are bundled in a form of a reed blind, and one edge or both edges thereof are fixed as described in, for example, Japanese Unexamined Patent Publication Nos. Hei. 6-340, 6-342, 6-344, and 7-24272.

However, those module structures still have the following problems: (1) the hollow fiber membrane is easily cut at the fixed edge thereof, (2) an effective membrane area is small, (3) an oscillation effect is not sufficiently given, and (4) pressure resistance strength of the modules is poor, thereby being unable to air back washing.

For example, if one edge of the hollow fiber membrane is made up of a free edge, the oscillation of the follow fiber membrane becomes too large. As a result, the hollow fiber membrane is repeatedly bent at the portion of the fixed edge, thereby being liable to be cut at that portion. If the hollow fiber membrane is expanded in an umbrella form, an effective membrane area decreases. Further, if the hollow fiber membranes are bundled in a reed blind shape, and are fixed in a slender shape, pressure resistance is poor, thereby being unable to sufficiently air back washing with applying high pressure from the inside of the hollow fiber membrane. Furthermore, although it is a common problem in those modules, since a membrane module and an aeration facility are independent, the fabrication is complicated.

Cut of the hollow fiber membrane occurs by the repeated bending at the fixed portion thereof as described above. Therefore, if air bubbles are made to flow along a direction of the fiber axis of the hollow fiber membrane, cut of the hollow fiber membrane is avoidable.

Since the effect of the air bubbles does not lie in the point that the air bubbles directly hit the hollow fiber membrane, but lies in the point that the flow of the air bubbles oscillates the hollow fiber membrane. Therefore, it is not always necessary to expand the hollow fiber membrane in an umbrella shape or a reed blind shape, and is sufficient if only the entire hollow fiber membrane oscillates as free as possible like seaweed without decreasing an area of the effective membrane.

The above-described problems involved in the prior art can be overcome if the hollow fiber membrane module and an air bubbling device can be integrated in one body so as to withstand air back washing of the hollow fiber membranes, while satisfying the above requirements.

### SUMMARY OF THE INVENTION

Accordingly, an object of the present invention is to provide a hollow fiber membrane integrated module having a structure in which air bubbles aerated in a liquid to be treated effectively oscillate the hollow fiber membrane, the hollow fiber membrane is not liable to be cut, an effective membrane area is large, the module withstands air back washing, and fabrication of the module is simple.

According to the present invention, there is provided a hollow fiber membrane integrated module, characterized in that at least two rows of hollow fiber membrane unit prepared by bundling a plurality of hollow fiber membranes are linearly arranged, at least two rows thereof are arranged in parallel, filtrate passageways of each unit are connected with each other, at least one aeration hole is present between those row in the vicinity of each hollow fiber membrane unit, those aeration holes are arranged in parallel, the aeration holes are connected with each other through air passageways, those structural elements are all assembled in an integrated body, and the integrated body has at least one filtrate outlet and at least one air inlet.

In this case, preferred embodiments of the hollow fiber membrane integrated module according to the present invention are as follows: a plurality of flow holes through which a liquid can freely go in and out are formed in the vicinity of aeration holes for air, independently of passages for a filtrate and passages for air in such a manner that holes penetrate vertically through the body; two pairs of hollow fiber membrane units comprise a bundle of a continuous hollow fiber membrane which is folded in a loop shape, and are supported by its loop portion; guide plates for air bubbles are disposed surrounding the hollow fiber membrane units and the aeration holes for air so as to oscillate the hollow fiber membrane by the air bubbles; both positive withstanding pressure and negative withstanding pressure are 100 KPa or more; and the body has legs having a height of 2 cm or more.

### BRIEF DESCRIPTION OF THE DRAWINGS

Fig. 1 is a front view of a hollow fiber membrane integrated module of the present invention;
Fig. 2 is a side view of the module shown in Fig. 1;
Fig. 3 is a cross sectional view taken along line A-A in Fig. 1;
Fig. 4 is a cross sectional view taken along line B-B in Fig. 3;
Fig. 5 is a cross sectional view taken along line C-C in Fig. 3;
Fig. 6 is a cross sectional view taken along line D-D in Figs 1 and 3; and
Fig. 7 is an explanatory view of a hollow fiber membrane unit before mounting.

### DETAILED DESCRIPTION OF THE INVENTION

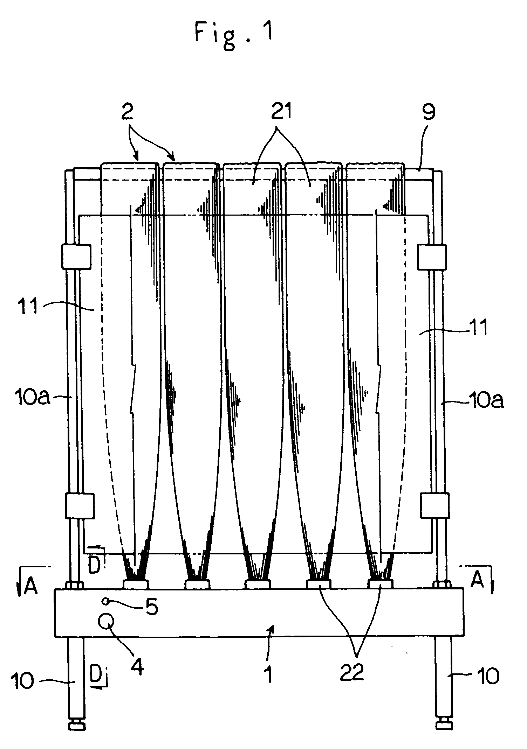

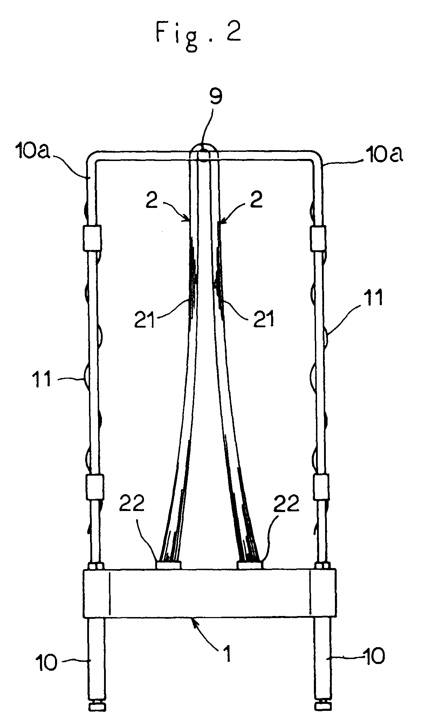

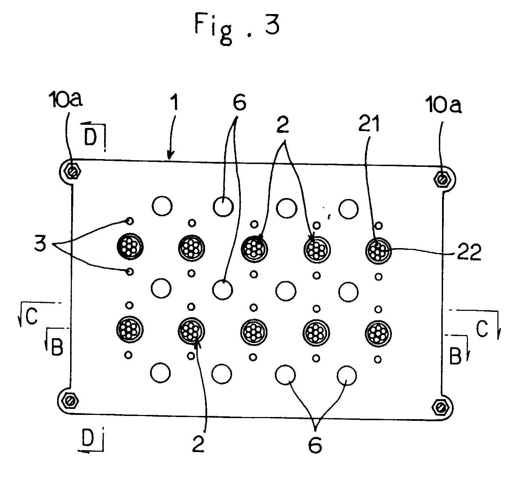

Figs. 1 to 6 are schematic views showing one example of a hollow fiber membrane integrated module according to the present invention. Fig. 1 is a front view of the hollow fiber membrane integrated module according to the present invention, Fig. 2 is a side view of the module shown in Fig. 1, and Fig. 3 is a cross sectional view taken along line A-A in Fig. 1. In those drawings, the hollow fiber membrane unit 2 is arranged in two rows on a integrated plate 1, but it is of course possible to arrange the follow fiber membrane unit in three or more rows. In those drawings, reference numeral 3 denotes an aeration hole; 4 , a filtrate outlet; 5, an air inlet; and 6, a flow hole of a liquid to be treated.

The hollow fiber membrane integrated module of the present invention has a constitution in which: at least two hollow fiber membrane units 2 each comprising a bundle of a plurality of hollow fiber membranes are linearly arranged; at least two rows thereof are disposed in parallel; filtrate passageways 12 of each unit 2 are connected with each other; at least one aeration hole 3 as an air blowing hole is present between those rows in the vicinity of each hollow fiber membrane unit 2; those aeration holes are linearly arranged; the respective aeration holes 3 are connected with each other through the air passageways 13; those structural elements are integrated on an integrally molded plate 1; and the integrated body has at least one filtrate outlet 4 and air inlet 5.

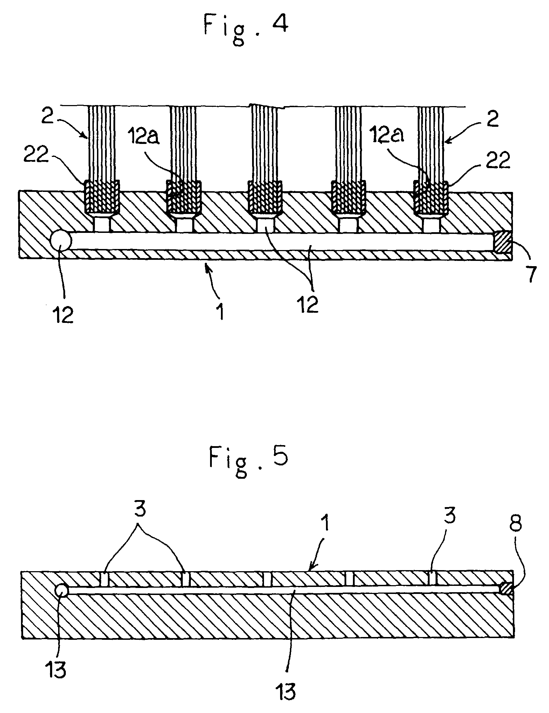

More specifically, a plurality of the hollow fiber membrane units 2 are linearly arranged on the integrated plate 1, the respective units are connected by the passageway 12 for the filtrate as shown in Fig. 4 (cross sectional view taken along line B-B in Fig. 3), and is communicated to the filtrate outlet 4. It should be noted that the passageway 12 is curved in the inside of the integrated plate 1, it is necessary for the passageway 12 to be formed in crossed-shape by integrally molding or perforating holes in the integrated plate 1 from different two directions. Openings other than the filtrate outlet 4 are clogged with a filtrate plug 7, and the filtrate is discharged from a single outlet 4.

Similarly, the aeration holes 3 are linearly arranged in the vicinity of the hollow fiber membrane units 2, and the aeration holes 3 are connected with each other through the air passage way 13 as shown in Fig. 5 (cross sectional view taken along line C-C in Fig. 3).

An air plug 8 acts to supply air from one inlet 5 to all of the aeration holes 3.

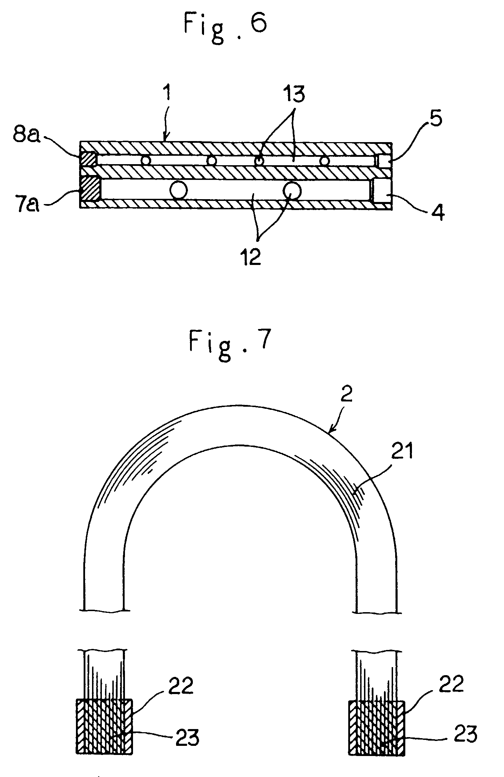

Fig. 6 (cross sectional view taken along line D-D in Figs. 1 and 3) shows a cross section of the integrated plate 1 including the filtrate outlet 4 and the air inlet 5. The passageway 12 linearly continuing to the filtrate outlet 4 and the passageway 13 linearly continuing to the air inlet 5 are formed so as to penetrate the integrated plate 1. For that reason, other openings of the passageways 12 are clogged with a filtrate plug 7a so that all of the filtrate in the hollow fiber membrane units 2 are discharged from the outlet 4. Further, other openings of the passageways 13 are clogged with an air plug 8a so that all the air supplied from the inlet 5 is distributed into all of the aeration holes 3. Those plugs 7a, 8a are used as connecting ports of connectors where at least two hollow fiber membrane modules are connected.

It is necessary for flow holes 6 of a liquid to be treated to be formed by penetrating the integrated plate 1, independently of the filtrate passageway 12 and the air passageway 13, so that the liquid to be treated can freely go up and down through the integrated plate 1.

Legs 10 fix the integrated plate 1 stably, and also secure a height from a set up surface to a lower surface of the plate so as not to cause an accumulation of the filtered materials on the plate by the liquid to be treated freely going up and down through the plate 1. The height is preferably about 2 cm or more.

In order to effectively oscillate the hollow fiber membrane, it is possible to restrict a free action of air bubbles by arranging a plurality of wave-form guide plates 11 on the upper surface of the integrated plate 1 so as to surround the hollow fiber membrane units 2 and the aeration holes 3, utilizing support frames 10a formed by extending the legs 10 for fixing the plate upwardly.

The hollow fiber membrane unit 2 may have a free edge, but it is preferred that the adjacent two units are linked in a loop shape, and are danglingly supported at the loop portion by a support member 9 provided to across the support frame 10a, to an extent that an entanglement of the hollow fiber membranes can be prevented.

The integrated plate 1 is prepared by injection molding a thermoplastic resin. A polyvinyl chloride is preferred as the thermoplastic resin in view of the facts that the hollow fiber membrane unit 2 bundled and fixed in advance, a filtrate discharging pipe, air sending pipe, and the like can be easily connected by adhesion. If there is no problem on adhesiveness and the like, the integrated plate 1 may be made of a metal.

As described above, the integrated plate 1 can be expanded by connecting a plurality of plates utilizing the filtrate plug 7a or the air plug 8a. However, the size of the expanded integrated plate 1 should be a size which can be easily handled, and to this effect, it is preferred that both length and width thereof do not exceed 60 cm.

Further, in order the entire hollow fiber membrane to effectively oscillate, it is preferred that a diameter of the bundled and fixed portion of the hollow fiber membrane unit 2 does not exceed about 2 cm, although it depends on a diameter of hollow fiber. It is more effective if this portion is thinned by forming nearly elliptical shape having a major axis in conformity with the arrangement direction of the units.

Considering pressure loss of filtrate, a length of the follow fiber membrane should be made shorter when an inner diameter of hollow fiber membrane is small, and the length thereof should be made longer when the inner diameter is large. Since the present invention uses the hollow fiber membrane having an inner diameter of 300 to 500 µm so as to effectively oscillate the entire hollow fiber membrane, the length of the follow fiber membrane per unit is set about 25 to 100 cm. Further, the hollow fiber membrane has a pore diameter of 0.1 to 0.5 µm, and a hollow fiber membrane comprising a known polysulfone, a polyethylene, a polypropylene, or the like can be used in the present invention.

Fig. 7 is a schematic view showing the hollow fiber membrane unit 2 before fixing onto the integrated plate 1. In this Figure, both edges of a bundle comprising several hundred hollow fiber membranes 21 are bundled and fixed in rings 22 made of a synthetic resin which is the same material as the material of the plate, with a thermosetting resin 23 such as an epoxy resin or an urethane resin. For example, when the ring 22 and the integrated plate 1 are made of a polyvinyl chloride, those are connected with an adhesive for a polyvinyl chloride pipe used as a tap water pipe. When those are made of a polypropylene or a polyethylene, heat welding is also possible. Then, Five to ten hollow fiber membrane units 2 per line are arranged at a distance of 5 to 10 cm.

The aeration holes 3 have a diameter of 0.5 to 2 mm. Those holes are preferably opened at a position near the fixed portion of the hollow fiber membrane units 2 as close as possible in order to effectively oscillate the entire hollow fiber membrane.

The hollow fiber membrane integrated module of the present invention is used for immersion filtration of, for example, activated sludge treating water containing a large amount of a material to be removed. Therefore, clogging of the membrane is unavoidable even if aeration and suction filtration are used in combination. In such a case, air back washing is effective to restore the filtration performance, but conventional modules do not always have a structure that withstands air back washing. However, in the module according to the present invention, the hollow fiber membrane unit 2 can withstand air back washing pressure, and since the filtrate passageway is built in the integrally molded plate, the unit 2 has a high pressure resistant structure. Therefore, not only back washing by the filtrate, but also back washing by high air pressure can be performed in the module of the present invention.

The hollow fiber membrane integrated module of the present invention has a large effective membrane area. For example, an integrated module in which eight units each having an effective length of 75 cm, prepared by bundling 400 hollow fiber membranes having an inner diameter of 500 µm and an outer diameter of 800 µm are arranged on a plate having a width of about 25 cm and a length of about 50 cm at a distance of 6 cm in two rows, has an effective membrane area of about 12 m².

The present invention is described in more detail with reference to the following examples, but the invention is not construed as being limited thereto.

### EXAMPLE

A plate for a hollow fiber membrane integrated module was integrally molded on a polyvinyl chloride plate having a length of 50 cm, a width of 25 cm and a thickness of 6 cm. The plate for a hollow fiber membrane integrated module had two rows of filtrate passageways 12 having a inner diameter of about 25 mm, four rows of air passageways 13 having an inner diameter of about 10 mm, two rows of eight mounting holes 12a for the hollow fiber membrane units 2, having a diameter of 26 mm, arranged at a distance of 6 cm and communicated to the filtrate passageways 12, four rows of aeration holes 3 having a diameter of 1 mm communicated to the air passageways 13, arranged along the mounting holes 12a side by side, three rows of flow holes 6 for a liquid to be treated, having a diameter of 30 mm positioned at the intermediate of the mounting holes 12a, and holes having a diameter of 11 mm for fixing legs 10 on which the plate was placed, at four corners.

Legs 10 having a height of 10 cm were fixed to this plate. Further, a support member 9 for the hollow fiber membrane, composed of a stainless steel round rod having a diameter of 10 mm was fixed to a stainless steel round rod (support frame 10a) having a diameter of 10 mm which extended from the leg 10 to a position of about 75 cm higher than the plate.

Separately, 400 polysulfone hollow fiber membranes 21 each having an inner diameter of 500 µm, an outer diameter of 800 µm, a length of about 160 cm and a pore diameter of about 0.45 µm were bundled, and both ends of the bundle were inserted into a polyvinyl chloride rings 22 having an outer diameter of 26 mm, an inner diameter of 20 mm and a length of 40 mm, and bundled and fixed with an urethane resin 23. Eight hollow fiber membrane units 2 were prepared in the same manner as above.

The central portions of those hollow fiber membrane units 2 were placed on the hollow fiber membrane support member 9 of the plate 1 prepared in advance, and the ring 23 was adhered to the mounting hole 12a for the hollow fiber membrane unit of the plate 1 with an adhesive for a polyvinyl chloride pipe used as a tap water pipe.

A polyvinyl chloride wave plate 11 having a height of about 60 cm was fixed to the support frame 10a. A coil-containing pressure resistant soft polyvinyl chloride tube 11 having an inner diameter of 38 mm was connected to the filtrate outlet 4, and a soft polyvinyl chloride tube having an inner diameter of 15 mm was connected to the air inlet 5. Openings of the filtrate passageways 12 and the air passageways 13 other than the above are all plugged. Water Filtration Test:

A hollow fiber membrane integrated module was placed in a water tank having three dimensions of all about 1 m at a position of a height of about 1.5 m, and fixed so that a tip end of a filtrate tube was positioned about 1 m from the bottom of the water tank.

Tap water was filled in the water tank, and extraction of a filtrate was commenced by suctioning the filtrate tube, then a suction pump was removed from the tube, and filtrate was spontaneously dropped. An initial filtration flow rate in this case was about 60 liters/minute.
Filtration of Activated Sludge Treated Water of Domestic Waste Water:

A magnetic valve was connected to an outlet of a filtrate tube, tap water was changed to prepare the activated sludge water to be treated of domestic waste water having a sludge concentration of about 6,000 mg/liter, separately from air for cultivating the sludge, air was continuously aerated while stirring from the aeration holes 3 at a flow rate of 200 liters/minute, and the magnetic valve was opened and closed at an interval of 1 minute to conduct an intermittent suction filtration by water level difference.

An initial filtration flow rate was about 0.3 m³/hour. However, the flow rate was gradually decreased, and was about 1/2 after one month.

At this time, a pressurized air of 450 KPa which was higher than the bubble point of the hollow fiber membrane was sent from the filtrate outlet, and the hollow fiber membranes was back washed with air for 1 minute.

When filtration was restarted, the initial filtration flow rate was almost restored, and showed the same change in the filtration flow rate with the passage of time as in the first operation.

During the operation, the follow fiber membranes were not cut, it showed a filtration speed of two times compared with that of the conventional device in spite of a small-sized device, and it was confirmed the effect that the function was restored by air back washing.

As described above, according to the hollow fiber membrane integrated module of the present invention, a liquid containing a large amount of materials to be removed such as activated sludge waters can be filtered with good efficiency without clogging and also without cutting the hollow fiber membranes at the fixed edges thereof. Further, filtration function can be restored by air back washing.

## Claims

1. A hollow fiber membrane integrated module, characterized in that at least two hollow fiber membrane units prepared by bundling a plurality of hollow fiber membranes are linearly arranged, at least two rows thereof are arranged in parallel, filtrate passageways of each unit are connected with each other, at least one aeration hole is present between those rows in the vicinity of each hollow fiber membrane unit, those aeration holes are linearly arranged, the respective aeration holes are connected with each other through air passageways, those structural elements are all assembled in an integrated body, and the integrated body has at least one filtrate outlet and at least one air inlet.

2. A hollow fiber membrane integrated module as claimed in claim 1, wherein a plurality of flow holes through which a liquid can freely go in and out are formed in the vicinity of aeration holes for air, independently of passages for a filtrate and passages for air, in such a manner that holes penetrate vertically through the body.

3. The hollow fiber membrane integrated module as claimed in claim 1, wherein two pairs of hollow fiber membrane units comprise a bundle of continuous hollow fiber membranes which is folded in a loop shape, and are supported by its loop portion.

4. A hollow fiber membrane integrated module as claimed in claim 1, wherein a guide plate for air bubbles is disposed surrounding the hollow fiber membrane units and aeration holes for air so that the hollow fiber membranes are oscillated by the air bubbles.

5. The hollow fiber membrane integrated module as claimed in claim 1, wherein both positive withstanding pressure and negative withstanding pressure of the filtrate passageways are 100 KPa or more.

6. The hollow fiber membrane integrated module as claimed in claim 1, wherein the plate has legs having a height of 2 cm or more.
